Europäisches Patentamt

European Patent Office

Office européen des brevets

(11) Veröffentlichungsnummer: **0 326 622**
**A1**

## EUROPÄISCHE PATENTANMELDUNG

(21) Anmeldenummer: 88101352.8

(22) Anmeldetag: 30.01.88

(51) Int. Cl.⁴: **A23L 1/211 , A23P 1/14 , A23K 1/14**

(43) Veröffentlichungstag der Anmeldung:
09.08.89 Patentblatt 89/32

(84) Benannte Vertragsstaaten:
**BE DE FR GB IT NL SE**

(71) Anmelder: **Schumacher, Heinz**
**Höperfeld 26**
**D-2050 Hamburg 80(DE)**

(72) Erfinder: **Schumacher, Heinz**
**Höperfeld 26**
**D-2050 Hamburg 80(DE)**

(74) Vertreter: **Glaeser, Joachim, Dipl.-Ing. et al**
**Patentanwalt Königstrasse 28**
**D-2000 Hamburg 50(DE)**

(54) **Verfahren und Vorrichtung zur Steigerung des Nährstoffangebots und zur Verbesserung der Verträglichkeit von protein- und/oder stärkehaltigen Futter- und Nahrungsmitteln.**

(57) Zur Steigerung des Nährstoffangebots und zur Verbesserung der Verträglichkeit von protein- und/oder stärkehaltigen Futter- und/oder Nahrungsmitteln werden diese in einer sogenannten Vorkonditionierung (W-I-D) bei eingestelltem Wassergehalt während ca. 10 bis 60 Min. auf Temperaturen von 90 bis 105 °C erhitzt, anschließend in eine Hochdruck-/Hochtemperatur-Zone (EX) überführt und hier durch Direktdampf schlagartig auf Temperaturen bis 135 °C (max. 25 bar) weiter erhitzt. Dabei beträgt die Verweilzeit in (EX) bis zu 5 Sekunden bis zu einigen Sekunden. Anschließend wird spontan, d.h. im Sinne einer Flash-Entspannung auf Atmosphärendruck und Temperaturen unter 100 °C entspannt. Durch die Verfahrenskombination ist der Gehalt an wasserlöslichen Proteinen variierbar; außerdem wird die Quellung der Stärke optimiert.

# Verfahren und Vorrichtung zur Steigerung des Nährstoffangebots und zur Verbesserung der Verträglichkeit von protein- und/oder stärkehaltigen Futter- und Nahrungsmitteln.

Zu den bedeutendsten Ausgangsmaterialien für die Bereitstellung von Kraftfuttermitteln gehören diejenigen pflanzlichen Rohstoffe, die sich durch einen hohen Gehalt an Proteinen und/oder Stärke auszeichnen, da diese Stoffe - ggf. im Zusammenwirken mit fett- oder ölhaltigen Begleit- oder Inhaltsstoffen - ein optimales Angebot an umsetzbarer Energie bzw. Nettoenergie in Form von Rohfett, Rohfasermaterial, N-freien Extraktionsstoffen (NFE), nativen Wirkstoffen usw. liefern.

Wichtige protein- und/oder stärkehaltige natürliche Ausgangsmaterialien für Kraftfuttermittel sind u.a. die Pflanzensamen durch ihren zusätzlich hohen Anteil an Fetten und Ölen. Beispiele hierfür sind Baumwollsaat, Mais, Sesam, Sonnenblumenkerne, Leinsamen u.a., die sich durch ihren variablen Gehalt an palmitinsäurereichen Ölen auszeichnen, weiter die Leguminosen wie Sojabohne und Erdnuß, sowie viele andere, deren Nennung sich hier erübrigt.

Sie alle unterscheiden sich neben differenziertem Fettsäureaufbau und damit differenziertem, aus ihnen gewonnenem Öl insbesondere durch unterschiedlichen Fettgehalt und Fettart, Wassergehalt, Eiweiß, stärkeähnliche Substanzen, Zucker usw. Entsprechend ist auch ihre Qualität und Eignung für Futter- und Nahrungsmittel unterschiedlich zu bewerten, zumal auch der Gehalt an Kohlenhydraten, Phosphatiden, Mineralstoffen und Vitaminen großen Schwankungen unterliegt.

Die Leguminosen z.B. gehören zwar zu den Futtermittelrohstoffen mit durchschnittlich hohem wenn nicht höchstem Gehalt an Proteinen (und Fetten), sie unterscheiden sich jedoch voneinander durch unterschiedlichen Gehalt an Stärke bzw. stärkeähnlichen Inhaltsstoffen.

So weisen z.B. Hülsenfrüchte wie Erbsen, Bohnen, Lupinen und andere sowohl einen hohen Anteil an Proteinen als auch Stärke auf, während andere wie Erdnuß, Soja usw. ein sehr hohes Proteinangebot bieten, jedoch in ihrem Stärkegehalt hinter den zuerst genannten weit zurückliegen.

Durch geeignete Mischungen untereinander können gewisse Mängel der einen oder anderen Komponenten in weitem Bereich ausgeglichen werden, so daß primär eine komplette, auf den Bedarf der jeweiligen Tierart sorgfältig abgestimmte Nahrung erhalten wird. Außer der direkten Verfütterung als Einzel- oder Mischprodukt sind natürlich auch Verbesserungsmethoden der technischen Qualität die Norm, als da sind: Einstellung eines bestimmten Feuchtigkeitsgrads, Optimierung der Reinheit, Verbesserung der Zerkleinerungsfähigkeit (Kaufähigkeit durch das Tier), Mischfähigkeit, Pressfähigkeit (Pelletsherstellung), Homogenität, Textur, Porosität, Schüttgewicht usw.

Es hat sich aber gezeigt - und dies ist allgemein bekannt - daß vorstehende rein mechanischphysikalische Methoden, einschließlich der Einstellung eines tierspezifischen Wertstoffgehalts durch Vermischung, nicht oder nur bedingt geeignet sind, die den Einzelkomponenten innewohnenden negativen Eigenschaften zu kompensieren bzw. zu eliminieren.

Dies betrifft im speziellen Fall bestimmte Geruchs- und Geschmacksstoffe, die Anwesenheit verwertungshemmender Stoffe, das Auftreten von Abbau- und Umwandlungsprodukten mit schädlichen oder sogar toxischen Eigenschaften sowohl bei der Aufnahme (Verfütterung) durch das Tier als auch während des Verdauungsvorgangs.

Weiter liegen viele Wertstoffe wie Proteine, Zucker, Stärke bzw. stärkeähnliche Verbindungen, Kohlehydrate usw. zunächst in einer Form vor, die für die Verdauung nur bedingt geeignet ist, so daß die erwartete Wirkung als Nahrungsmittel nicht oder nur teilweise eintritt. Hier hilft bloßes Vermischen mit Ausgleichsstoffen nicht, da derartige Zuschläge vielfach selbst andere, unerwünschte, oder das Gleichgewicht der Zusammensetzung störende Begleitstoffe einbringen.

Ein weiteres Problem ist die Aufnahmefähigkeit durch das Tier selbst bzw. die Situation einer optimalen Futterverwertung. Dies gilt z.B. in besonderem Maße für Eiweiß. Es ist bekannt, daß sogenannte Ruminanten (Wiederkäuer), wie Rinder, Ziegen, Schafe und anderes Hornvieh, wasserlösliches Eiweiß nur bedingt optimal verwerten. Die Nahrung gelangt zunächst wenig zerkaut in den Pansen und wird dann fortwährend zur Zerkleinerung und Durchmischung zwischen Pansen und Netzmagen bewegt. Portionsweise wird das Futtermittel dann zum abermaligen, nun aber intensiven Zerkauen in die Mundhöhle zurückgeführt, von wo es, zu einem Brei verarbeitet und chemisch aufbereitet (Protozoen des Pansen), direkt in den Labmagen (Verdauung) weitergeleitet wird.

Der relativ lange und zeitraubende Weg des Futters von der Aufnahme bis zur endgültigen Verdauung macht es verständlich, daß das Eiweiß bei der Fütterung von Ruminanten einen möglichst niedrigen Gehalt an schnelllöslichem Eiweiß aufweisen sollte, damit allmählich eine volle Nutzung gewährleistet ist.

Umgekehrt ist das Verhalten von Geflügel und anderem, nicht wiederkäuendem Vieh (Monogastrier). Insbesondere für Jungschweine, Hähnchen, Leghühner u.a. ist ein Futter mit hohem Anteil an wasserlöslichem Eiweiß von größter Bedeutung, wird es doch sofort der Verdauung zugeführt, so daß es in kürzester Zeit voll zur Wirkung kommt.

Ein weiteres Problem sind - wie eingangs bereits gesagt - im Futtermittel selbst anwesende Geruchs und Geschmacksstoffe, Bitterstoffe, verdauungshemmende Begleitstoffe usw. Hier sei beispielhaft auf die Sojabohne verwiesen, die gerade in jüngster Zeit als sogenannte Vollfett-Soja (FFS) größte Bedeutung als Kraftfutter, ggf. auch als Zusatz zu sogenannten "Mischfuttern" gewonnen hat. Die Sojabohne ist bei weitem die vielseitigste Ölsaatfrucht. Durch den hohen Anteil an pflanzlichem Öl, der je nach Provenienz zwischen etwa 17 und 22 Gew.-%, bezogen auf Trockensubstanz, betragen kann, sowie einem höchsten effektiven Masseanteil von bis zu 50 Gew.-% Eiweiß, bezogen auf ölfreien Rückstand, entsprechend etwa 65 NPU-Einheiten (Net Protein Utilization) - ideales Eiweiß hat den theoretischen NPU-Wert 100 - ist die Sojabohne das ideale Kraftfutter, das die wesentlichsten Nährstoffe Fett und Eiweiß in optimalen Anteilen enthält.

Noch vor wenigen Jahren galt das Interesse an der Sojabohne ausschließlich der Gewinnung von Fetten und Ölen durch Pressung und/oder Extraktion, wobei Lezithine und Proteine als Nebenprodukte erhalten wurden. Lediglich der bei der Extraktion anfallende Rückstand, das öl- bzw. fettfreie Schrot, wurde nach einer intensiven Aufbereitungstechnologie (Toasten etc.) der Verwendung als Nahrungs- und Futtermittel zugeführt. Durch die Ölabtrennung enthält das Schrot keine Fettbestandteile mehr, andererseits ist jedoch das verwertbare Eiweiß nahezu vollkommen erhalten. Abgesehen vom Verlust weiterer wichtiger Inhaltsstoffe ernährungsphysiologischer Natur während der Extraktion und während der Entbenzinierung/Toastung, fehlt das gesamte Fett der Sojabohne im Schrot, so daß letzterem als Kraftfutter Grenzen gesetzt sind.

Es hat daher nicht an Bestrebungen gefehlt, die Sojabohne selbst, d.h. ohne vorausgehende Extraktion oder Pressung und damit bei vollem Gehalt an Öl bzw. Fett sowie Eiweißstoffen, als Futtermittel anzubieten, zumal hierdurch gegenüber dem Schrot nicht nur erhebliche Prozess- bzw. Verarbeitungsstufen eingespart werden, sondern auch alle weiteren Inhaltsstoffe wie Spurenelemente, Vitamine usw. erhalten bleiben.

Von besonderer Bedeutung ist hier das Vollfett-Sojamaterial (FFS = Full Fat Soybeans), bei dem es sich um ein in bekannter Weise durch Reinigung, Brechen oder Flocken und in feuchter Atmosphäre erhitztem Roh-Sojabohnenmaterial handelt und das, soweit als bisher möglich, von unerwünschten bzw. schädlichen Begleiterscheinungen durch eben diesen thermischen Eingriff in feuchter Atmosphäre befreit wurde. Insbesondere bei der Fütterung von monogastrischen Tieren ist es unbedingt erforderlich, eine Reihe verwertungshemmender Substanzen zu zerstören bzw. zu inaktivieren. Zu nennen sind hier insbes. ein Enzym, das als Hemmstoff des proteinspaltenden Verdauungsenzyms Trypsin wirkt und daher als Trypsin-Inhibitor bezeichnet wird; weiter das wachstumshemmende Soyin sowie das Ferment Urease. Die Urease gefährdet die Harnstoffverwertung beim Wiederkäuer, so daß auch Rindermischfutter mit einem Harnstoffzusatz nur feuchtthermisch behandeltes Sojamaterial enthalten sollten, da der zugesetzte Harnstoff unter Ammoniak bildung zersetzt wird. Ähnlich verhält es sich mit in Roh-Soja enthaltenen Hämaglutidinen und vor allem dem Enzym Lipoxygenase (Lipoxidase), das Oxidations- und Autoxidationsreaktionen katalysiert, worauf der bittere Geschmack und der unangenehme, grasartige Geruch insbesondere beim Einweichen der Soja in Wasser, zurückgeführt wird. Die Folge der Anwesenheit aller vorgenannten Begleitstoffe bzw. deren Aktivität ist eine negative Beeinflussung der organoleptischen und ernährungsphysiologischen Qualität, trotz des hohen Fett- und Eiweißgehalts in z.B. FFS-Material.

Ähnlich, wenn auch nicht identisch, verhält es sich mit anderen Saaten, wie sie eingangs genannt wurden.

Stärkehaltige Futtermittel wie Mais, Weizen, Gerste, Reis oder Milo (Sorghum), aber auch Knollen- und Wurzelfrüchte wie Kartoffeln, Tapioka, Sago und andere, enthalten die Stärke nahezu ausschließlich in einer Form, die nur bedingt einer schnellen und ausreichenden Verdauung zugänglich ist, obwohl die Stärke im chemischen Sinne zu den verdaulichen Kohlehydraten zählt.

Die Makromoleküle der nativen Starke sind, ähnlich wie die des Glykogens, aus Anhydroglucose-Einheiten (Amylose und Amylopektin) aufgebaut, die im Endosperm als Stärkekorn unterschiedlicher Größe eingelagert sind. Die native Stärke wird jedoch im Tier, wenn als Korn vorliegend, nach der Aufnahme nur langsam von den Verdauungsenzymen in ihre Bestandteile (lösliche Glukose) abgebaut bzw. verzuckert. Dieser Vorgang ist jedoch von größter Bedeutung, denn erst durch den Effekt der Verzuckerung kann der Nährstoffgehalt der Stärke optimal verwertet werden. Zusätzlicher Aufschluß durch Verkleisterung führt zu einer Stärke mit hohem Quellvermögen. Diese ist erheblich besser verdaulich als native Stärke, die ja bekanntlich von Jungtieren wie Kälbern kaum verwertet werden kann. Umgekehrt wird eine verzuckerte oder teilverzuckerte, verkleisterte Stärke, die ggf. noch als Quellstärke vorliegt, begierig angenommen und verwertet.

Es ist Aufgabe der Erfindung, ein Verfahren und eine zur Durchführung des Verfahrens geeignete Anlage bereitzustellen, wodurch das Nährstoffangebot sowie die Verträglichkeit von protein- und/oder stärkehaltigen pflanzlichen Rohstoffen für Futter- und Nahrungsmittel gesteigert bzw. verbessert werden. Im speziellen Falle sollen gemäß Aufgabe der Erfindung folgende Verbesserungen erzielt werden:

(a) der lösliche Anteil an Eiweiß bzw. Proteinen soll variierbar und einstellbar sein;

(b) dies auch bzw. insbesondere bei Voll-Fett-Material;

(c) Geruchs- und Geschmacksbeeinträchtigungen sollen eliminiert werden;

(d) die Verzuckerung, Verkleisterung und ggf. Queilung von Stärke soll verstärkt bzw. eingeleitet werden;

(e) dies ohne negative Beeinflussung der ernährungsphysiologischen und energieliefernden Wirkung der pflanzlichen Rohmaterialien.

Gelöst wird diese Aufgabe durch thermische Konditionierung der pflanzlichen, fett-, protein- und/ oder stärkehaltigen Rohmaterialien in wasserdampfhaltiger Atmosphäre im kontinuierlichen Prozeß unter veränderlichen Druckbedingungen. Dabei wird das nach bekannten Verfahren gereinigte und zerkleinerte, bevorzugt jedoch nicht geschälte Material in einer ersten, der Vorkonditionierung dienenden Stufe indirekt und/oder direkt und unter ständiger Bewegung auf Temperaturen zwischen etwa 100 und 105° C erhitzt. Sofern das Material - wie es z.B. bei der Verarbeitung von Sojabohnen zweckmäßig ist - vor dieser Temperaturbehandlung geflockt werden soll, erfolgt zunächst eine Anwärmung auf ca. 50 bis 60° C, dann die Flockung - wobei eine weitere geringe Temperatursteigerung auftritt - und schließlich die indirekte oder direkte Temperung im vorstehend angegebenen Temperaturbereich der Vorkonditionierung.

Nach einer Verweilzeit von 10 bis 60 Min. wird das so vorkonditionierte Material bei der Temperatur der Vorkonditionierung in ein geschlossenes System (Hochdruckzone) überführt und hier sofort, d.h. innerhalb von Bruchteilen von Sekunden, im Durchlauf durch das System, durch Direktdampf auf über 125° C, in Abhängigkeit von Aufgabe und Rohmaterial bis 135° C (maximal 25 bar) spontan erhitzt und nach einer Verweilzeit von 3 bis 5 Sek. bei den gegebenen Temperatur-/Druck-/Verweilzeit-Bedingungen schlagartig auf Atmosphärendruck oder darunter sowie auf Temperaturen unterhalb 100° C entspannt, gekühlt und evtl. getrocknet. Die Entspannung erfolgt durch spontanen Austrag aus dem kontinuierlich operierenden geschlossenen System.

Von Bedeutung ist beim erfindungsgemäßen Verfahren, daß der Wassergehalt des Rohmaterials in der Hochdruckzone einen bestimmten Wert angenommen hat. Dieser Wassergehalt, der zwischen etwa 10 Gew.-% und etwa 22 Gew.-% liegen soll, wird in der Vorkonditionierung eingestellt, er kann aber auch in der Hochdruckzone noch ergänzt werden durch Verwendung von Direktdampf, der im Material kondensiert und dadurch den Feuchtigkeitsgehalt erhöht. Im allgemeinen wird der Wassergehalt des Materials durch Wasserdampf eingestellt bzw. variiert unter Zugrundelegung des Primär-Wassergehalts des in das Verfahren eintretenden Materials. Da praktisch in der gesamten Anlage eine ständige Wasserdampfatmosphäre vorhanden ist, kann durch zusätzlichen Direktdampf oder aber auch durch Zusatz von Wasser, insbesondere Warm- bzw. Heißwasser der Feuchtigkeitsgehalt der Atmosphäre beeinflußt und damit der Wassergehalt des zu verarbeitenden Materials gesteuert werden.

Es ist bereits bekannt, z.B. Sojamaterial durch Dampfbehandlung zu entbittern. Hierzu schlägt die DE 23 39 908 vor, das Material zweistufig zu fluidisieren, wobei die Erwärmung des Materials durch Kondensation des Trägerdampfes erfolgt. Bei diesem Verfahren werden gemäß Angaben Bitterstoffe und sogenannte Hemmstoffe zerstört, es ist aber weder eine Einstellung bzw. Variierung des Anteils an löslichem Eiweiß bzw. Protein möglich, noch erfolgt eine ausreichende Quellung der Stärke. Außerdem führt die Langzeitbehandlung zum Abbau von Inhaltsstoffen wie Vitaminen usw., die dadurch als Wertstoff des Futter- bzw. Nahrungsmittels verloren gehen. Schließlich muß die Benutzung des doppelten Fließbetts zu erheblichen Energie- und Apparateaufwendungen führen, was durch die erfindungsgemäße Hochdruckbehandlung in Bruchteilen von Sekunden eliminiert wird.

Die DE 35 42 075 beschreibt ein Verfahren, bei dem Leguminosen, Stärketräger oder dergleichen Material durch Riffelwalzen gebrochen und anschließend einer thermischen Behandlung im Temperaturbereich von 75 bis 105° C unterworfen werden. Es handelt sich hier aufgabengemäß um die Verbesserung der Verdaulichkeit derartiger Materialien, ohne daß durch das bekannte Verfahren der Gehalt an löslichen bzw. unlöslichen Proteinen variierbar ist. Die Hochdruck-/Hochtemperaturbehandlung gemäß Erfindung ist nicht vorgesehen, wodurch auch alle durch diese erfindungsgemäße Stufe erhaltenen überraschenden Ergebnisse nicht auftreten können.

Das Verfahren gemäß DE 23 13 224 arbeitet ebenfalls im Fließbett mit Dampf als Trägermittel. Durchführung und Ergebnisse entsprechen im Prinzip den Bedingungen der DE 23 39 908. Dies gilt auch für das Verfahren und die Vorrichtung nach DE 33 05 168 oder nach EP 0 052 218, während die EP 0 187 877 eine trockene Vorkonditionierung vorschlägt.

Die US 4 359 480 beschreibt ein Verfahren zur Herstellung von Sojabohnenmehl, das keinen bitteren Geschmack aufweist. Um dies zu erreichen, wird das gemahlene und geflockte Sojamaterial einer Plättchenstärke von 0,25 mm bevorzugt durch Wasserdampf befeuchtet und anschließend bei Temperaturen zwischen 90 und 120°C während etwa 10 bis 90 Min. mechanisch bewegt, so daß sich ein Schüttgewicht von mind. 400 kg/m³ einstellt. Anschließend erfolgt die Extraktion zur Gewinnung von Öl und Schrot.

Schließlich gehört zum Stand der Technik auch die DE 23 35 385, die die Vorbehandlung von Ölsaaten zur Ölgewinnung betrifft, wobei eine mechanische Aufbereitung und eine sogenannte thermische Konditionierung kombiniert unter Luftabschluß erfolgen. Für die Verfahrensdurchführung wird eine kontinuierlich arbeitende Schnecke vorgeschlagen, deren Konstruktion der eigentliche Inhalt bzw. Gegenstand der genannten Druckschrift darstellt. Im Gegensatz zur Erfindung arbeitet diese Schnecke unter vermindertem Druck, so daß weder die erfindungsgemäß erforderliche spontane Druckentspannung noch die im kontinuierlichen Fluß erfolgende Vorkonditionierung angesprochen wird. Außerdem enthält die Druckschrift keine Verfahrensparameter, die zur Lösung der erfindungsgemäß gestellten Aufgabe beitragen können.

Durch das gegenüber dem bekannten Stand der Technik völlig anders ablaufende erfindungsgemäße Verfahren, bei dem das Material ohne Unterbrechung im kontinuierlichen Prozeß sowohl eine Normaldruck- und ca. 100°C Temperatur-Zone (Vorkonditionierung) sowie direkt anschließend eine Hochdruck-/Hochtemperatur-Zone durchläuft, wobei die Verweilzeiten in der sogenannten Vorkonditionierung ca. 10-60 Minuten, insbes. 20-40 Min. und bevorzugt 12-15 Min., beträgt, während in der Hochdruck-/Hochtemperaturzone die Verweilzeit bei Bruchteilen von Sekunden bis zu einigen Sekunden liegt, und anschließend eine spontane Entspannung und Abkühlung erfolgt, gelingt nicht nur die völlige Zerstörung der Bitterstoffe, der Geruch und Geschmack beeinflussenden Begleitstoffe, die Beseitigung toxischer Abbauprodukte usw., es wird auch erstmals ermöglicht, wahlweise ein Endprodukt mit hohem oder niedrigem Gehalt an wasserlöslichem Eiweiß bereitzustellen bzw. Zwischenwerte zu erhalten und gleichzeitig die Verzuckerung, Verkleisterung und ggf. Quellung von Stärke einzuleiten bzw. zu optimieren.

Von besonderer Bedeutung ist in diesem Zusammenhang noch die sogenannte PDI-Zahl (Protein-Dispersibility-Index), die den Grad der Wasserlöslichkeit durch Messung des bei schnellem Rühren in Lösung gehenden Stickstoffs angibt. Diese PDI-Zahl sinkt beispielsweise beim Erhitzen von Sojaprotein während etwa 30 Min. bei 90 bis 100°C von ursprünglich 90 auf 15 ab, d.h. die Wasserlöslichkeit geht durch die Temperaturbehandlung entsprechend zurück. Wie aber einleitend bereits abgehandelt, ist eine Variierung der Protein-Wasserlöslichkeit aufgrund der unterschiedlichen Aufnahme und Verdauung des Tiers von entscheidender Bedeutung.

Durch die Maßnahmen der Erfindung wird es weiter ermöglicht, ganz spezifische Gehalte an wasserlöslichem Eiweiß in FFS-Sojamaterial (Voll-Fett-Soja) einzustellen, so daß eine spezifische Anpassung an die Verdauungsbedingungen des Viehs gegeben ist.

Besonders bewährt für das Verfahren der Erfindung hat sich als System für die Hochdruck-/Hochtemperatur-Behandlung ein sogenannter Expander, wie er in der DE 35 29 229 des Anmelders beschrieben wird, dort aber zur Vorbereitung von geflocktem Sojamaterial für die Extraktion mit organischen Lösemitteln dient.

Eine wichtige Rolle beim erfindungsgemäßen Verfahren spielt auch das Zusammenwirken zwischen thermischer Vorkonditionierung bei gegebenem Wassergehalt und Direktdampfeinwirkung einerseits und die abschließende Behandlung in der Hochdruck-/Hochtemperatur-Zone andererseits. Die Bedeutung der Dampfbehandlung in der Hochdruck-/Hochtemperatur-Zone mit nachfolgender spontaner Entspannung dient der Einstellung der in der vorausgegangenen Vorkonditionierung erhaltenen Produktqualität. Es werden nicht nur Restanteile von Schadstoffen abgebaut, es wird auch die PDI-Zahl auf den erhaltenen Wert fixiert, so daß keine weiteren Veränderungen, d.h. weder weiterer Abfall der PDI-Zahl noch Abfall überhaupt bei hohen PDI-Zahlen, meßbar werden. Nach der spontanen Entspannung haben sich die Produkteigenschaften stabilisiert, der Anteil an löslichem Protein ist eingestellt, die Stärke zeigt einen optimalen Quellungswert.

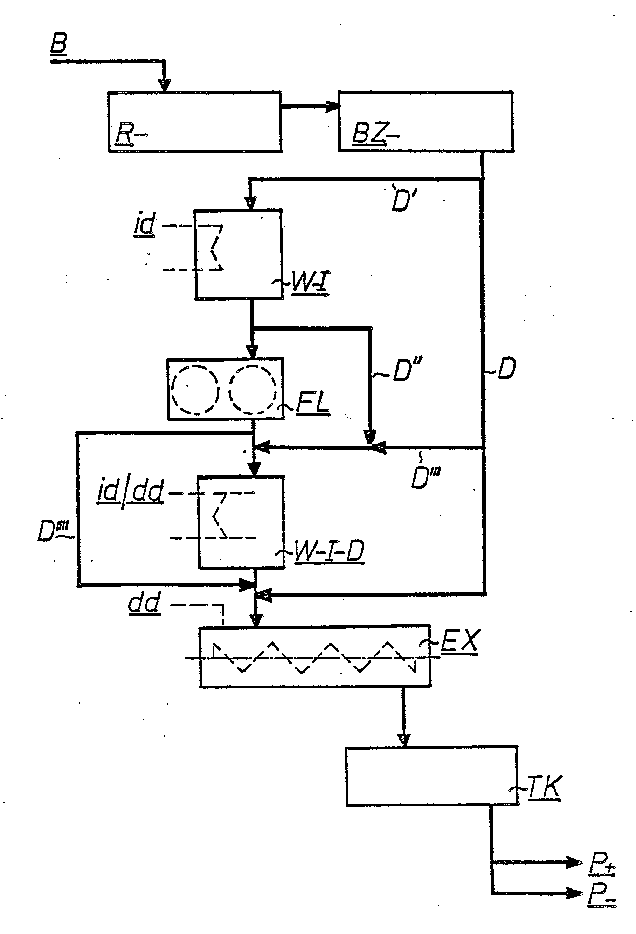

Die Erfindung wird nachstehend am Beispiel von Sojabohnen für Kraftfuttermittel anhand der einzigen Figur beschrieben, wobei auch die wichtigsten Verfahrensstufen und Anlagenschwerpunkte abgehandelt werden.

Die aus dem Silo kommenden Sojabohnen (B) werden zunächst in bekannter Weise gereinigt (R) und zerkleinert bzw. gebrochen (BZ). Sie gelangen dann über Leitung (D) in eine erste Anwärmphase (WI), wo sie z.B. in sogenannten Wärmepfannen oder Rohrbündelaggregaten indirekt auf 50-60°C aufgeheizt werden (id). Anschließend erfolgt die Ausbildung von Flocken oder Plättchen auf sogenannten Glattwalzen (FL). Bei diesem Vorgang steigt die Temperatur des Materials um weitere 4-7°C an, so daß beim Eintritt in die eigentliche Vorkonditionierzone (W-I-D) die Flocken eine Eigentemperatur von ca. 55 bis 65°C aufweisen.

Dieser Teil des Verfahrens entspricht weitgehend demjenigen Stand der Technik, wie er zur Vorbereitung von Sojabohnen für die Extraktion und damit für die Ölgewinnung seit langem praktiziert wird.

Die erfindungsgemäße Weiterbildung vorstehend abgehandelter Vorbereitungsstufe besteht nun darin, daß das ca. 55 bis 65 °C heiße, geflockte Material mit einem Eigen-Wassergehalt von ca. 8-12 Gew.-% in einer geeigneten Vorrichtung, z.B. ebenfalls in Wärmepfannen (W-I-D), unter ständiger Bewegung und kontinuierlich auf die Temperatur der Vorkonditionierung, d.h. auf 100- 105 °C weiter erhitzt wird, wobei durch Einstellung des Wassergehalts mit Hilfe von Direktdampf (id/dd) auf Werte zwischen ca. 10,0 und ca. 22,0 Gew.-% die PDI-Zahl des Endprodukts reguliert wird. Wie aber bereits einleitend gesagt, kann diese Einstellung des Wassergehalts ggf. auch mit Wasser oder mit Dampf und Wasser in bestimmten Mengenverhältnissen erfolgen, wobei die Auslegung der Anlage der Wassergehalt des Materials, die Art der Anlagenbeheizung sowie die Wirtschaftlichkeit des Verfahrens derartige Variationen bestimmen.

Dabei kann für Produkte mit erwünschten hohen PDI-Werten, d.h. hohem Gehalt an wasserlöslichem Eiweiß, der Eigen-Wassergehalt ausreichend sein, er sollte aber Werte zwischen etwa 12,0 und etwa 15,0 Gew.-% aufweisen. Für niedrige PDI-Zahlen, d.h. bei niedrigem Gehalt an wasserlöslichem Eiweiß, sind Wassergehalte von ca. 18 bis 22% erforderlich, um bei gleichen Verweilzeiten und Temperaturen die erwünschte PDI-Zahl zu erhalten. Die Einstellung des hohen Wassergehalts im Flockenmaterial erfolgt durch Direktdampf (dd), d.h. es wird die Wärmepfanne (W-I-D) sowohl indirekt als auch direkt (id/dd) mit Dampf beheizt. Die benötigte Dampfmenge wird in Abhangigkeit von Materialprovenienz, Eigen-Wassergehalt, Temperatur, Verweilzeit usw. in der Vorkonditionierung (W-I-D) durch Variierung des Anteils an Direktdampf (dd) zum Gesamt- bzw. Indirekt-Dampfbedarf (id) eingestellt.

Im allgemeinen liegt die Verweilzeit in der Vorkonditionierung (W-I-D) bei 10 bis 60 Min., insbes. bei 20 bis 40 Min. und bevorzugt bei ca. 12- 15 Min., je nachdem, ob außer der indirekten Beheizung wenig oder viel direkter Dampf zusätzlich verwendet wird. Die durchschnittliche Temperatur liegt zwischen 100 und 105 °, je nach zu verarbeitendem Material. Diese Zeit/Temperaturbedingungen reichen aus, um die Voreinstellung des Feuchtigkeitsgehaltes vorzunehmen für das jeweilige zu verarbeitende Rohprodukt und in Abhängigkeit von erwünschten Analysen im Endprodukt. Das heißt, wird ein FFS-Produkt mit niedriger Urease und weitgehender Denaturierung gewünscht, so wird der Feuchtigkeitsgehalt auf 18% eingestellt. Wird jedoch ein FFS-Endprodukt gewünscht mit sehr hohem Gehalt an wasserlöslichem Protein, so wird nur wenig Direktdampf in der Vorkonditionierung (W-I-D) verwendet, um den Feuchtigkeitsgehalt im Produkt niedrig zu halten.

Nach Beendigung der Behandlung in (W-I-D) wird das noch heiße Material in die Hochdruck-Hochtemperatur-Zone, beispielsweise in einen Expander (EX), überführt und im kontinuierlichen Durchsatz innerhalb von insgesamt 3 bis 5 Sek. und durch Hochdruck-Direktdampf (dd) auf 125-135 °C (2,0 - 25 bar) erhitzt.

Nach einer bevorzugten Verweilzeit von ca. 3 bis ca. 5 Sek. unter Hochdruck-/Hochtemperatur-Bedingungen erfolgt am Ausgang der Zone (EX) die schlagartige Entspannung auf Atmosphärendruck oder darunter, begleitet von einer Abkühlung des Materials auf unter 100 °C. Dieser Vorgang entspricht einer sogenannten Flash-Verdampfung, die in Kombination mit der Hochdruck-/Hochtemperatur-Behandlung zu einer Stabilisierung der Materialeigenschaften führt.

Anschließend erfolgt in an sich bekannter Weise Trocknung und ggf. Kühlung des Materials (TK), so daß ein Fertigprodukt mit variablem, d.h. einstellbarem Gehalt an löslichem Eiweiß (P+; P-) ohne weitere Nachbehandlung erhalten wird, zumal das Material durch die schockartige Entspannung in lockerer, direkt verpackbarer Form anfällt.

Von besonderer Bedeutung ist, daß Zwischenwerte der PDI-Zahl also praktisch stufenlos zwischen hoher und niedriger PDI-Zahl möglich sind. Funktionswert ist der Wassergehalt des Sojamaterials in der Vorkonditionierstufe (W-I-D), verbunden mit den Werten für Zeit und Temperatur, sowie eine schockartige Erhitzung mit Dampf in der Hochdruck-/Hochtemperatur-Zone (EX) und ebenso schockartige Entspannung, wodurch Stabilisierung des Materials erfolgt.

Das Endprodukt fällt in Granulatform an; die Schalen der Sojabohnen, die ja nicht abgetrennt wurden, sind in die Masse eingebaut und kaum noch zu erkennen. Eine Trennung ist daher nicht möglich, aber auch nicht erforderlich, da das Schalenmaterial in der nun vorliegenden, mit dem behandelten Fruchtfleisch vermischten Form vom Tier ohne weiteres aufgenommen wird.

Wird ein FFS-Produkt für Ruminanten hergestellt, so ist der Fettgehalt unverändert und entspricht dem Gehalt des Ausgangsmaterials, Antitrypsin und Urease sind praktisch eliminiert. Die Qualität des Eiweißes entspricht der gewünschten Form, nämlich PDI kleiner als 10.

Wird jedoch ein FFS-Produkt für Monogastriker mit hohem PDI-Wert über 60 hergestellt, so wird das Antitrypsin ausreichend zerstört sein, jedoch die Urease nur teilweise. Die Urease-Aktivität ist völlig unwichtig und harmlos, solange die Futtermischung keinen zusätzlichen Harnstoff enthält.

Das vorstehend am Beispiel von Sojabohnen erläuterte Verfahren, d.h. Vorkonditionierung (W-I-D) bei 100 - 105°C und Hochdruck-/Hochtemperatur-Behandlung (EX) bei Temperaturen über 125°C sowie max. 25 bar in Direktdampfatmosphäre ist unter gleichen oder nur geringfügig abgewandelten Bedingungen auch bei anderem fett-, protein- und/oder stärkehaltigem pflanzlichem Rohmaterial anwendbar.

Bei Sojabohnen und einigen weiteren insbesondere harten Bohnen- oder Kernmaterialien ist vielfach eine Flockung oder Glattwalzung zu dünnen Plättchen erforderlich, damit die Schalenstücke und Kernbestandteile freigelegt werden. Diese bei ca. 50 bis 70°, ggf. auch bei bei höheren Temperaturen erfolgte Flockung, die gleichzeitig auch der Plastifizierung des Bohnenbruchs dient, ist bei der Ölgewinnung durch Extraktion mit einer Sichtung, d.h.Trennung von Kern-und Schalenmaterial verbunden. Beim erfindungsgemäßen Verfahren zur Verbesserung der Qualität derartiger Stoffe für Futter- und Nahrungsmittel wird auf eine derartige Sichtung verzichtet, damit auch das wertvolle Schalenmaterial voll genutzt wird.

Handelt es sich beim Rohmaterial um relativ weiche pflanzliche Rohstoffe wie Getreidesamen, Wurzeln, einige Hülsenfruchtarten oder auch bereits zerkleinert anfallendes Rohmaterial, so kann auf die Flockung verzichtet werden. Das Rohmaterial kann dann direkt von der Zerkleinerung (BZ) über (D) und (D''') der Vorkonditionierung (W-I-D) zugeführt werden, oder es erfolgt eine zusätzliche Anwärmung auf 50 bis 65°C indirekt in (W-I) über (D') und Umgehung der Flockung (FL) über (D'') in die Vorkonditionierung (W-I-D). Eine derartige Verfahrenswahl ist allein eine Funktion des angebotenen Rohmaterials, wobei die Flockung, die aus der Ölgewinnung bekannt ist, nicht auf Sojabohnen beschränkt ist.

Vom Rohmaterial bzw. von dessen rheologischen Eigenschaften, Wassergehalt und Eigentemperatur abhängend, kann es auch ermöglicht sein, ungeflocktes und nicht vorkonditioniertes Material direkt der Hochdruck-Hochtemperatur-Zone (EX) über Leitung (D) zuzuführen, wobei sowohl die erste Anwärmphase (WI), die Flockung (FL) als auch die Vorkonditionierung umgangen werden. Diese Möglichkeit ist aber ebenso eine Ausnahme wie die alleinige Umgehung der Vorkonditionierung (WID) nach der Flockung in (FL) über Leitung (D'''').

Schließlich ist noch zu bemerken, daß das neue Verfahren nicht ausschließlich auf einheitliche pflanzliche Rohmaterialien anwendbar ist, wie sie zum Beispiel eingangs definiert sind. So haben Untersuchungen ergeben, daß auch bestimmte Futtermittel-Gemische, die also neben den zu behandelnden protein-und/oder fett- und/oder stärkehaltigen Wirkstoffen bereits bestimmte, das Futtermittel insgesamt aufbauende Zuschläge wie Mineralstoffe (Kochsalz, Phosphate, Carbonate u.a.), Getreibenebenprodukte, Fisch- und Knochenmehl, Streckmittel, Nebenprodukte der Zuckerindustrie, Aromastoffe, Biozide usw. enthalten, ohne weiteres dem neuen Verfahren zugänglich sind, sofern das Verfahren die Gemischbestandteile nicht negativ beeinflußt.

Bei derartigen Fertigprodukten, insbes. Kraftfuttergemischen, richtet sich der Weg der Behandlung (vgl. Figur) ausschließlich nach der gestellten Aufgabe, das ist der eingesetzte protein- und/oder fett-und/oder stärkehaltige Rohstoff selbst und die angestrebte Verbesserung im Hinblick auf den variierbaren Gehalt an Eiweiß bzw. Proteinen, Geruchs-und Geschmacksanhebung, Erhöhung der Stärkeverzuckerung usw.

Es wurde bereits gesagt, daß die Stufen der Vorkonditionierung (W-I-D) und der Hochdruck-/Hochtemperatur-Behandlung (EX) in direkter Kombination, d.h. direkter Verbindung zueinander, stehen, damit die Temperaturanhebung ( = Druckanhebung) in (EX) schlagartig erfolgen kann. Wenn sich bei diesen erfindungsgemäß wichtigsten und - was besonders für die Hochdruck-Hochtemperatur-Zone (EX) gilt - allein das Endergebnis beeinflussenden Stufen sogenannte Wärmepfannen und Rohrbündelaggregate für die Vorkonditionierung (W-I-D) sowie Expander, etwa in Anlehnung an die DE 35 29 229 für die Stufe (EX), als besonders zweckmäßig und vorteilhaft erwiesen haben, so versteht es sich, daß auch andere Aggregate geeignet sind, die eine Materialaufheizung direkt und/oder indirekt in (W-I-D) im kontinuierlichen Fluß, sowie gleichzeitige Einstellung des Wassergehalts des Materials und anschließend schlagartigen Druck- und Temperaturanstieg in (EX) sowie darauf folgende Entspannung in Wasserdampfatmosphäre ermöglichen.

## Ansprüche

1. Verfahren zur Steigerung des Nährstoffangebots und Verbesserung der Verträglichkeit von fett-, protein- und/oder stärkehaltigen pflanzlichen, als Futter- und/oder Nahrungsmittel geeigneten Rohstoffen durch thermische Konditionierung in wasserdampfhaltiger Atmosphäre im kontinuierlichen Prozess unter veränderlichen Druckbedingungen, dadurch gekennzeichnet, daß das in bekannter Weise gereinigte und zerkleinerte, bevorzugt jedoch nicht geschälte Rohmaterial zunächst entweder auf 50 bis 60°C angewärmt und ggf. geflockt und anschließend direkt oder indirekt unter ständiger Bewegung auf 100 - 105°C erhitzt wird, oder bei nicht erforderlicher Flockung ohne Anwärmung auf diese Temperatur gebracht wird, und nach einer Verweilzeit von 10 bis 60 Min., insbes. 20-40 Min. und bevorzugt 12- 15 Min., diese Vorkonditionierung unterbrochen und das Material bei der gegebenen Temperatur von 100 - 105°C in ein geschlossenes System überführt wird, wo es durch Direktdampfeinwirkung innerhalb von Bruchteilen von Sekunden auf über 125°C, insbesondere bis 135°C (max. 25 bar) erhitzt und nach einer Verweilzeit von 3 bis 5 Sek. unter vorstehenden Temperatur-Druck-Bedingungen schlagartig auf Atmosphärendruck oder darunter sowie Temperaturen unterhalb 100°C entspannt, gekühlt und evtl. getrocknet wird, wobei der Wassergehalt des behandelten Materials in Abhängigkeit vom Rohstoff und der gestellten Aufgabe zwischen ca. 10 Gew.-% und ca. 22 Gew.-% variieren kann und in der Vorkonditionierung und/oder in der Hochdruckzone durch Direktdampf oder Wasser oder durch ein Dampf-Wassergemisch eingestellt wird.

2. Verfahren nach Anspruch 1 zur Herstellung von Vollfett-Sojamaterial mit hoher PDI-Zahl von 30 - 60 sowie ggf. darüber,
dadurch gekennzeichnet, daß die zerkleinerten Sojabohnen vor oder während der Vorkonditionierung auf einen Wassergehalt von 12,0 - 15,0 Gew.-% eingestellt werden.

3. Verfahren nach Anspruch 1 zur Herstellung von Vollfett-Sojamaterial mit niedriger PDI-Zahl von 5,0-10,0,
dadurch gekennzeichnet, daß die zerkleinerten Sojabohnen vor oder während der Vorkonditionierung auf einen Wassergehalt von ca. 18 Gew.-% bis ca. 22 Gew.-% eingestellt werden.

4. Verfahren nach Ansprüchen 1 - 3,
dadurch gekennzeichnet, daß für mittlere PDI-Zahlen von über 10 bis unter 30 der Wassergehalt der zerkleinerten Sojabohnen in der Vorkonditionierung auf Werte von über 15 Gew.-% bis ca. 18 Gew.-% eingestellt wird.

5. Verfahren nach einem der Ansprüche 1 - 4,
dadurch gekennzeichnet, daß bei der Behandlung von Sojabohnen diese vor der Vorkonditionierung bei Temperaturen von 55 - 65°C geflockt werden.

6. Verfahren nach Anspruch 1,
dadurch gekennzeichnet, daß die Einstellung des Wassergehalts des Rohmaterials durch Direktdampf in der Vorkonditionierung erfolgt.

7. Verfahren nach Ansprüchen 1 - 6,
dadurch gekennzeichnet, daß die Vorkonditionierung in sogenannten Wärmepfannen oder Rohrbündelaggregaten erfolgt.

8. Verfahren nach Ansprüchen 1 - 7,
dadurch gekennzeichnet, daß die Hochdruckbehandlung bei 125 bis max. 135°C in einem kontinuierlich arbeitenden Expander erfolgt.

9. Verfahren nach Anspruch 8,
dadurch gekennzeichnet, daß die schlagartige Entspannung aus dem Expander in eine Unterdruckzone erfolgt.

10. Verfahren nach Ansprüchen 1 - 9,
dadurch gekennzeichnet, daß die Hochdruckzone sauerstoff- bzw. luftfrei gehalten wird.

11. Vorrichtung zur Durchführung des Verfahrens nach Ansprüchen 1 - 10,
gekennzeichnet durch folgende nacheinander geschaltete Aggregate: Rohstoffsilo, Rohstoffreinigung und -zerkleinerung (B; R; BZ), Anwärmvorrichtung (WI) mit indirekter Beheizung (id); Vorkonditionierung (W-I-D) mit indirekter und direkter Beheizung (id/dd); Hochdruckzone (EX); sowie Kühl- und Trockenzone (TK).

12. Vorrichtung nach Anspruch 11,
gekennzeichnet durch ein Rohstoff-Flockungsaggregat (FL) zwischen Anwärmvorrichtung (W-I) und Vorkonditionierung (W-I-D).

13. Vorrichtung nach Ansprüchen 11 und 12,
dadurch gekennzeichnet, daß die Hochdruckzone (EX) aus einem Expander besteht.

14. Vorrichtung gemäß Ansprüchen 11 bis 13,
dadurch gekennzeichnet, daß Leitungseinheiten (D, D', D'', D''', D'''') eine Führung des Materials von der Rohstoffaufbereitung (BZ) zur Anwärmvorrichtung (WI) oder direkt zur Vorkonditionierung (W-I-D) oder direkt in die Hochdruckzone (EX) erlauben bzw. die Umgehung der Flockungseinheit (FL) und/oder der Vorkonditionierung (W-I-D) ermöglicht ist.

15. Anwendung des Verfahrens nach Ansprüchen 1 bis 10 auf fett- und/oder protein- und/oder stärkehaltige natürliche Ausgangsmaterialien für Kraftfutter- und Nahrungsmittel.

16. Anwendung gemäß Anspruch 15 auf abgestimmte Kraftfuttermischungen.

Europäisches Patentamt

**EUROPÄISCHER RECHERCHENBERICHT**

Nummer der Anmeldung

EP 88 10 1352

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 231 825 (U. WALTER) * Ansprüche 1-12; Spalte 2, Zeile 36 - Spalte 4, Zeile 1; Spalte 4, Zeile 46 - Spalte 6, Zeile 9; Figuren * --- | 1,2,5- 11,13, 15,16 | A 23 L 1/211 A 23 P 1/14 A 23 K 1/14 |
| D,Y | DE-C-3 529 229 (H. SCHUMACHER) * Ansprüche 1-18; Spalte 6, Zeilen 49-61; Beispiele; Figuren 2,5,6 * --- | 1,2,5- 11,13, 15,16 | |
| A | EP-A-0 061 229 (MEELFABRIEK WEERT) * Anspruch 2; Seite 8, Zeile 34 - Seite 10, Zeile 28; Figur 2 * --- | 1 | |
| A | US-A-3 764 708 (TATSUO AONUMA et al.) * Ansprüche 1,7,8; Spalte 2, Zeile 47 - Spalte 5, Zeile 27; Beispiele * --- | 1 | |
| D,A | FR-A-2 390 909 (AKZO) & US-A-4 359 480 ----- | | |

**RECHERCHIERTE SACHGEBIETE (Int. Cl.4)**

A 23 L
A 23 P
A 23 K

Der vorliegende Recherchenbericht wurde für alle Patentansprüche erstellt

| Recherchenort | Abschlußdatum der Recherche | Prüfer |
|---|---|---|
| DEN HAAG | 04-10-1988 | DESMEDT G.R.A. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument